# EUROPÄISCHE PATENTSCHRIFT

(11) **EP 2 895 339 B1**
(45) Veröffentlichungstag und Bekanntmachung des Hinweises auf die Patenterteilung: **20.07.2016**
(21) Anmeldenummer: 13742247.3
(22) Anmeldetag: 31.07.2013
(51) Int. Cl.: B60C 13/02, B60C 5/00, B60C 13/00

(54) **FAHRZEUGLUFTREIFEN**
PNEUMATIC TYRE
PNEUMATIQUE

(30) Priorität: 11.09.2012 DE 102012108455
(43) Veröffentlichungstag der Anmeldung: 22.07.2015
(73) Patentinhaber: Continental Reifen Deutschland GmbH, 30165 Hannover (DE)
(72) Erfinder: RITTWEGER, Stefan, 30163 Hannover (DE)
(74) Vertreter: Finger, Karsten
(86) Internationale Anmeldenummer: PCT/EP2013/066045
(87) Internationale Veröffentlichungsnummer: WO 2014/040794

(56) Entgegenhaltungen:
- WO-A1-01/17801
- WO-A1-2011/138867
- JP-A- H10 147 114

## Beschreibung

Die Erfindung betrifft einen Fahrzeugreifen - insbesondere Fahrzeugluftreifen - mit profiliertem Laufstreifen und mit zwei Seitenwänden, wobei auf wenigstens einer Seitenwand - insbesondere in der äußeren radialen Erstreckungshälfte der Seitenwand - ein über den ganzen Umfang des Reifens erstrecktes - insbesondere schraffurartiges - Muster in einer über den ganzen Umfang des Reifens erstreckten und im Wesentlichen in Umfangsrichtung U ausgerichteten Nut ausgebildet ist, welche mit ersten Nutsegmenten und mit zweiten Nutsegmenten ausgebildet ist, die in Umfangsrichtung U in alternierender Abfolge hintereinander angeordnet sind, wobei die Nutsegmente nach radial außen hin jeweils von einer die Nut nach radial außen begrenzenden radial äußeren Begrenzungsflanke und nach radial innen hin von einer die Nut nach radial innen begrenzenden radial inneren Begrenzungsflanke begrenzt werden.

Bei derartigen Fahrzeugluftreifen ist es bekannt, im radial äußeren Erstreckungsbereich der Seitenwand beispielsweise zur einfachen optischen Kenntlichmachung des Reifentypes oder der Reifendimension radial außerhalb der in der Seitenwand ausgebildeten Beschriftungsabschnitte zwischen den Beschriftungsabschnitte und dem Laufstreifen eine über den gesamten Umfang des Fahrzeugluftreifens erstreckte breite Umfangsnut auszubilden, welche im Grunde der Nut mit einem schraffierten Muster versehen ist. Die gewählte Breite der Umfangsnut, die Position der Umfangsnut sowie der gewählte Schraffurtyp sollen ein schnelles Erkennen des genauen Reifentypes und/oder der Reifendimension ermöglichen. Derartige Nuten werden zu diesem Zwecke bei Nutzfahrzeugen eingesetzt. Dies ermöglicht eine schnelle erste Information für erforderliche Reifenzustandskontrollen, Reifenaustausch oder auch für durchzuführende Runderneuerung. Bei Neureifen sind diese Schnellerkennungsnuten üblicher Weise als über den gesamten Umfang des Fahrzeugluftreifens kreisringförmig erstreckte Nuten mit definierter Positionierung, Breite und Muster deutlich erkennbar. Allerdings führt Abrieb an Bordsteinkanten oder der im Einsatz von Baustellen, welcher typischerweise je nach Einsatzzweck in den Baustellen bestimmte radiale Abschnitte der Seitenwand besonders mit Abrieb belasten, dazu, dass die Umfangsnut bei einem Einsatz gerade in den für die gewählte Position der Umfangsnut besonders kritischen Abriebbereichen einheitlich über den gesamten Umfang abgerieben wird und somit ihre Bedeutung für die Kenntlichmachung des Reifens unerwünscht schnell verlieren kann.

Aus der WO 2011/138867A1 ist ein Fahrzeugreifen gemäß den Merkmalen des Oberbegriffs von Anspruch 1 bekannt.

Der Erfindung liegt die Aufgabe zugrunde, mit einfachen Mitteln die Lebensdauer derartiger Fahrzeugreifen mit schraffurartigen Mustern ausgebildeten Umfangsnuten in der Seitenwand zu erhöhen.

Die Aufgabe wird erfindungsgemäß durch die Ausbildung eines Fahrzeugreifens - insbesondere eines Fahrzeugluftreifens - mit profiliertem Laufstreifen und mit zwei Seitenwänden, wobei auf wenigstens einer Seitenwand - insbesondere in der äußeren radialen Erstreckungshälfte der Seitenwand - ein über den ganzen Umfang des Reifens erstrecktes - insbesondere schraffurartiges - Muster in einer über den ganzen Umfang des Reifens erstreckten und im Wesentlichen in Umfangsrichtung U ausgerichteten Nut ausgebildet ist, welche mit ersten Nutsegmenten und mit zweiten Nutsegmenten ausgebildet ist, die in Umfangsrichtung U in alternierender Abfolge hintereinander angeordnet sind, wobei die Nutsegmente nach radial außen hin jeweils von einer die Nut nach radial außen begrenzenden radial äußeren Begrenzungsflanke und nach radial innen hin von einer die Nut nach radial innen begrenzenden radial inneren Begrenzungsflanke begrenzt werden, gemäß den Merkmalen von Anspruch 1 gelöst, bei dem die ersten Nutsegmente radial außerhalb der zweiten Nutsegmente angeordnet sind, bei dem der Übergang zwischen erstem Nutsegment und benachbartem zweitem Nutsegment jeweils als radialer Versatz der Nut um das Versatzmaß a nach radial innen und der Übergang zwischen zweitem Nutsegment und zu diesem benachbartem ersten Nutsegment jeweils als radialer Versatz der Nut um das Versatzmaß a nach radial außen ausgebildet ist, und bei dem das erste Nutsegment zumindest in einem Umfangserstreckungsabschnitt mit seiner maximalen in radialer Richtung R gemessenen Breite B₁ mit a ≥ B₁ und das zweite Nutsegment zumindest in einem Umfangserstreckungsabschnitt mit seiner maximalen in radialer Richtung R gemessenen Breite B₂ mit a ≥ B₂ ausgebildet ist.

Durch diese Ausbildung wird ermöglicht, dass in einem Einsatz des Reifens jeweils nur ein Teil der mit dem schraffierten Muster versehenen Umfangsnut in vollem Umfang dem Abrieb unterliegt und die anderen Umfangsabschnitte durch ihre in radialer Richtung versetzte Position dem für diesen Einsatz besonders kritischen Bereich des Abriebs vom Abrieb weitgehend verschont bleibt. Hierdurch kann der Einfluss des typischen Abriebs an Bordsteinkanten oder der Einfluss bei Einsatz in besonders abrieberzeugenden Bedingungen im Baustellenbereich auf die Schnellerkennbarkeit des Reifens reduziert werden. Je nach besonderer Hauptanforderung des Fahrzeuges und somit der Reifen bleiben hierdurch die einen oder die anderen Umfangsabschnitte geschont und erhalten auf diese Weise eine erhöhte Lebensdauer. Auf diese Weise kann die Umfangsnut über eine längere Lebensdauer die ihr zugewiesene Funktion erfüllen.

Besonders vorteilhaft zur Sicherstellung eines optimalen Schutzes ist die Ausbildung eines Fahrzeugreifens gemäß den Merkmalen von Anspruch 2, wobei die ersten Nutsegmente sich über einen Umfangswinkel α des Reifens mit 10°≤α≤50° erstrecken gemessen längs der Erstreckung ihrer das erste Nutsegment nach radial außen hin begrenzenden Flanke, und wobei die zweiten Nutsegmente sich über einen Umfangswinkel β des Reifens mit 10°≤β≤50° erstrecken gemessen längs der Erstreckung ihrer das zweite Nutsegment nach radial außen hin begrenzenden Flanke.

Besonders vorteilhaft ist die Ausbildung eines Fahrzeugreifens gemäß den Merkmalen von Anspruch 3, wobei die Umfangswinkel α und β mit α = β ausgebildet sind. Hierdurch können die wirkenden Scheuerkräfte in ihrer Auswirkung vergleichmäßigt werden.

Besonders vorteilhaft ist die Ausbildung eines Fahrzeugreifens gemäß den Merkmalen von Anspruch 4, wobei die die Nut im ersten Nutsegment nach radial außen begrenzende radial äußeren Begrenzungsflanke in Umfangsrichtung U erstreckt ausgerichtet ist und mit ihrer Erstreckung in der Seitenwandoberfläche ein Kreissegment bildet.

Besonders vorteilhaft ist die Ausbildung eines Fahrzeugreifens gemäß den Merkmalen von Anspruch 5, wobei die die Nut im ersten Nutsegment nach radial innen begrenzende, radial innere Begrenzungsflanke in Umfangsrichtung U erstreckt ausgerichtet ist und mit ihrer Erstreckung in der Seitenwandoberfläche ein Kreissegment bildet.

Besonders vorteilhaft ist die Ausbildung eines Fahrzeugreifens gemäß den Merkmalen von Anspruch 6, wobei die Nut im ersten Nutsegment längs ihrer Erstreckung wenigstens über einen Umfangswinkel γ mit γ≥ 2° mit der konstanten Breite B₁ ausgebildet ist.

Besonders vorteilhaft ist die Ausbildung eines Fahrzeugreifens gemäß den Merkmalen von Anspruch 7, wobei die Nut im ersten Nutsegment jeweils in einem Umfangsabschnitt zwischen Versatz zum zweiten Nutsegment und dem mit konstanter Breite B₁ ausgebildeten Erstreckungsabschnitt mit einer Breite B₃ ausgebildet ist mit (1/3)B₁≤ B₃≤B₁.

Besonders vorteilhaft ist die Ausbildung eines Fahrzeugreifens gemäß den Merkmalen von Anspruch 8, wobei die Nut im ersten Nutsegment längs ihrer Erstreckung von Versatz zum in Umfangsrichtung vorgeordneten zweiten Nutsegment bis zum in Umfangsrichtung nachgeordneten zweiten Nutsegment mit konstanter Breite B₁ ausgebildet ist.

Besonders vorteilhaft ist die Ausbildung eines Fahrzeugreifens gemäß den Merkmalen von Anspruch 9, wobei das erste Nutsegment zumindest in einem unmittelbar an den Versatz anschließenden Umfangserstreckungsabschnitt mit seiner maximalen in radialer Richtung R gemessenen Breite B₁ ausgebildet ist.

Besonders vorteilhaft ist die Ausbildung eines Fahrzeugreifens gemäß den Merkmalen von Anspruch 10, wobei die die Nut im zweiten Nutsegment nach radial innen begrenzende, radial äußere Begrenzungsflanke in Umfangsrichtung U erstreckt ausgerichtet ist und mit ihrer Erstreckung in der Seitenwandoberfläche ein Kreissegment bildet.

Besonders vorteilhaft ist die Ausbildung eines Fahrzeugreifens gemäß den Merkmalen von Anspruch 11, wobei das zweite Nutsegment zumindest in einem unmittelbar an den Versatz anschließenden Umfangserstreckungsabschnitt mit seiner maximalen in radialer Richtung R gemessenen Breite B₂ ausgebildet ist.

Besonders vorteilhaft ist die Ausbildung eines Fahrzeugreifens gemäß den Merkmalen von Anspruch 12, wobei die Nut im zweiten Nutsegment längs ihrer Erstreckung von Versatz zum in Umfangsrichtung vorgeordneten ersten Nutsegment bis zum in Umfangsrichtung nachgeordneten ersten Nutsegment mit konstanter Breite B₂ ausgebildet ist.

Besonders vorteilhaft ist die Ausbildung eines Fahrzeugreifens gemäß den Merkmalen von Anspruch 13, wobei die Breiten B₁ und B₂ mit (0,25 B₁) ≤ B₂ ≤ B₁ ausgebildet sind.

Die Erfindung wird im Folgenden an Hand der in den Figuren 1 bis 9 dargestellten Ausführungsbeispiele näher erläutert. Hierin zeigen
- Fig. 1: einen Fahrzeugluftreifen in Seitenansicht,
- Fig. 2: einen vergrößerten Ausschnitt des Fahrzeugluftreifens von Fig.1 in Seitenansicht,
- Fig. 3: eine Querschnittdarstellung des Reifens von Fig.2 gemäß Schnitt III-III von Fig.2,
- Fig. 4: eine Querschnittdarstellung des Reifens von Fig.2 gemäß Schnitt IV-IV von Fig.2,
- Fig. 5: einen Ausschnitt der Querschnittdarstellung des Reifens von Fig.3 in vergrößerter Darstellung,
- Fig. 6: eine Seitenansicht eines Fahrzeugluftreifens mit alternativer Ausbildung der Nut,
- Fig. 7: eine Querschnittdarstellung des Reifens von Fig.6 gemäß Schnitt VII-VII in vergrößerter Darstellung,
- Fig. 8: eine Seitenansicht eines Fahrzeugluftreifens mit weiterer alternativer Ausführung der Nut,
- Fig. 9: eine Querschnittdarstellung des Reifens von Fig.8 gemäß Schnitt IX -IX von Fig.8 in vergrößerter Darstellung.

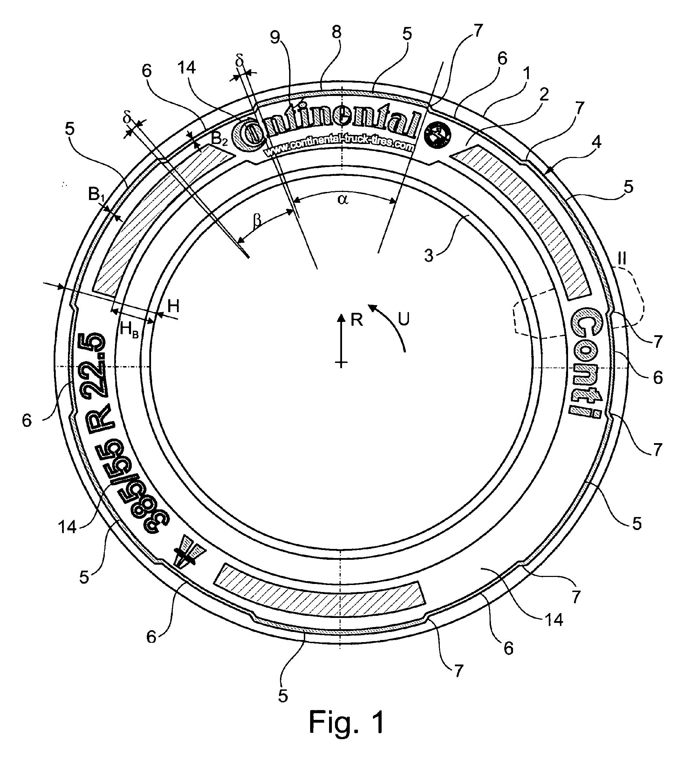

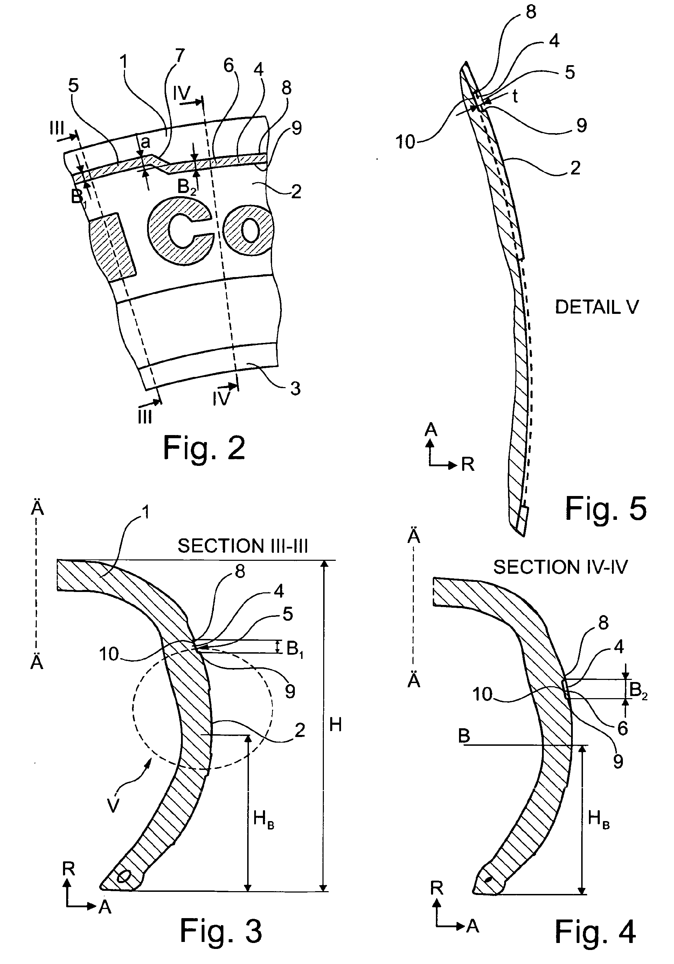

Die Figuren 1 bis 5 zeigen einen Fahrzeugluftreifen bekannter Art, welcher in radialer Richtung R nach außen, zur Straßenoberfläche hin mit einem profilierten Laufstreifen begrenzt wird. In axialer Richtung A zu beiden Seiten hin ist der Fahrzeugluftreifen radialer Bauart jeweils mit einer Reifenseitenwand ausgebildet, welche sich ausgehend vom profilierten Laufstreifen 1 in radialer Richtung R nach innen hin bis zum Wulstbereich 3 erstreckt und welche jeweils in axialer Richtung A nach außen zu der vom Reifen wegweisenden Seite mit einem Seitenwandgummistreifen 2 bekannter Art begrenzt wird. In den Figuren 2 bis 5 ist jeweils nur der zur rechten Reifenschulter hin weisende Abschnitt des Reifens und die den Reifen in die axiale Richtung A zu dieser Seite hin begrenzende Seitenwand mit dem Seitenwandgummistreifen 2 dargestellt. In radialer Richtung R nach innen hin ist an jeder Reifenseitenwand jeweils ein Wulstbereich 3 mit einem in Umfangsrichtung U erstreckten zugfesten Wulstkern bekannter Art ausgebildet, mit welchem der Reifen auf der Felge befestigt wird.

Der Fahrzeugluftreifen ist mit einer in radialer Richtung R gemessenen Reifenhöhe H und mit einer maximalen Breite B ausgebildet, welche im montierten Zustand unter Normbedingungen gemessene werden. Die maximale Breite B ist dabei in einer radialen Position im radialen Abstand H_{B} vom radial inneren Erstreckungsende des Reifenquerschnitts im montierten Zustand ausgebildet. Wie in Fig.1 zu erkennen ist, sind in der in axialer Richtung A vom Reifen wegweisenden Oberfläche des Seitenwandgummistreifens 2 in Umfangsrichtung U des Fahrzeugluftreifens gesehen über den Umfang des Reifens hinweg verteilt im Bereich der Reifenseitenwand mehrere Abschnitte 14 ausgebildet, in welchen Beschriftungen ausgebildet sind. Diese Abschnitte 14 sind in einem radialen Erstreckungsbereich radial außerhalb des Wulstbereiches 3 ausgebildet. Wie in Fig. 1 zu erkennen ist, ist radial außerhalb der Position der Abschnitte 14 zwischen den Abschnitten 14 und dem profilierten Laufstreifen 1 in der in axialer Richtung A des Fahrzeugluftreifens vom Reifen weg weisenden Oberfläche des Seitenwandgummistreifens 2 eine über den gesamten Umfang des Fahrzeugluftreifens erstreckte und im Wesentlichen in Umfangsrichtung U ausgerichtete Nut 4 ausgebildet. Die Nut 4 ist - wie in den Figuren 1, 2, 3 und 4 dargestellt ist - in axialer Richtung A zum Reifen hin mit einem Nutgrund 10 begrenzt, welcher sich über den gesamten Umfang des Fahrzeugluftreifens erstreckt und der mit einer Schraffur versehen ist. Die Nut 4 ist in radialer Richtung R nach außen hin durch eine Nutflanke 8 und in radialer Richtung R nach innen hin durch eine Nutflanke 9 begrenzt. Die Nutflanken 8 und 9 erstrecken sich dabei jeweils aus dem Nutgrund 10 im Wesentlichen senkrecht zur Oberfläche des Nutgrundes 10 bis zu der den Seitenwandgummistreifen 2 in axialer Richtung A nach außen hin begrenzenden Oberfläche.

Die Nut 4 ist in Umfangsrichtung U des Fahrzeugluftreifens gesehen aus mehreren in alternierender Abfolge hintereinander angeordneten ersten, radial äußeren Nutsegmenten 5 und zweiten, radial inneren Nutsegmenten 6 ausgebildet. Wie in Fig.1 dargestellt ist, sind über den Umfang des Reifens hinweg in alternierender Reihenfolge hintereinander verteilt beispielsweise sechs erste Nutsegmente 5 und sechs zweite Nutsegmente 6 ausgebildet. Wie in Fig. 1 dargestellt ist, erstrecken sich die ersten Nutsegmente 5 mit der das Nutsegment 5 jeweils in radialer Richtung R nach außen hin begrenzenden Nutflanke 8 in Umfangsrichtung U über einen Umfangswinkelwinkel α des Fahrzeugluftreifens und die zweiten Nutsegmente 6 mit der das Nutsegment 6 jeweils in radialer Richtung R nach innen hin begrenzenden Nutflanke 9 über einen Umfangserstreckungswinkel β des Fahrzeugluftreifens um die Reifenachse. Die Winkel α und β sind dabei mit 10° ≤ α ≤ 50° und mit 10° ≤ β ≤ 50° gewählt ausgebildet. Im Nutsegment 5 ist dabei längs der Erstreckung des Nutsegmentes 5 die Nutflanke 8 in Umfangserstreckungsrichtung U des Fahrzeugluftreifens ausgerichtet. In dem in Fig. 1 dargestellten Ausführungsbeispiel ist die Nut 4 in der nach axial außen weisenden Oberfläche des Seitenwandgummistreifens 2 längs ihrer Erstreckung im Nutsegment 5 mit einer in radialer Richtung R zwischen Nutflanke 8 und Nutflanke 9 in radialer Richtung R gemessenen konstanten Breite B₁ ausgebildet. An dem in Umfangsrichtung U gemessenen Erstreckungsende eines Nutsegmentes 5 ist die Nut 4 jeweils mit einem Übergangsabschnitt 7 ausgebildet, welcher sich über einen Umfangserstreckungswinkel δ mit δ ≤ 2° - beispielsweise mit δ = 1° - erstreckt und in das in Umfangsrichtung U benachbarte radial innere Nutsegment 6 mündet. Nut 4 erstreckt sich im Übergangsabschnitt 7 mit ihren Nutflanken 8 und 9 im Wesentlichen geradlinig. Im Übergangsabschnitt 7 ist die Nut 4 ausgehend von dem dem Übergangsabschnitt 7 in Umfangsrichtung U vorgeordneten radial äußeren Nutsegment 5 mit einem in radialer Richtung R ausgebildeten Versatz um das Versatzmaß a nach radial innen hin versetzt in das dem Übergangsabschnitt in Umfangsrichtung U nachgeordneten radial inneren Nutsegment 6 ausgebildet. In Umfangsrichtung U diesem Nutsegment 6 nachgeordnet ist dann am Erstreckungsende des Nutsegmentes 6 wiederum in analoger Weise ein Übergangsabschnitt 7 ausgebildet, in dem die Nut 4 mit einem entsprechenden radialen Versatz um das Versatzmaß a nach außen hin versetzt in das in Umfangsrichtung U nachfolgende radiale äußere Nutsegment 5 übergeht. Im Ausführungsbeispiel der Figuren 1 bis 5 ist das Nutsegment 6 jeweils mit seiner in radialer Richtung R nach innen hin gerichteten Flanke 9 in Umfangsrichtung U ausgerichtet. Dabei ist die Nut 4 in der nach axial außen weisenden Oberfläche des Seitenwandgummistreifens 2 längs ihrer Erstreckung im Nutsegment 6 zwischen dem dem Nutsegment 6 vorgeordneten Übergangsabschnitt 7 bis zu dem dem Nutsegmetn 6 nachgeordneten Übergangsabschnit 7 mit einer konstanten in radialer Richtung R gemessenen Breite B₂ ausgebildet. Wie in Fig. 2 dargestellt ist, wird das Maß des Versatzes a als das Maß des in radialer Richtung R nach innen hin erfolgenden Versatzes der radial äußeren Flanke 8 zwischen dem dem Übergang 7 vorgeordneten Nutsegment 5 und dem dem Übergang 7 nachgeordneten Nutsegment 6 bemessen.

Das Versatzmaß a ist dabei so gewählt, dass a ≥ B₁ und a ≥ B₂ ausgebildet ist. Das Maß B₁ ist mit 4mm ≤ B₁ ≤ 12mm gewählt. Das Maß B₂ ist mit 4mm ≤ B₂ ≤ 12mm gewählt. Die senkrecht zum Nutgrund 10 gemessene Tiefe t, welche - wie in Fig. 5 dargestellt - den senkrechten Abstand zwischen Nutgrund 10 und der über die Nut 4 hinweg verlängerten Mantellfäche der vom Reifen wegweisenden Seitenwandoberfläche angibt ist mit 0,5 mm ≤ t ≤ 3mm ausgebildet.

Die Nutflanke 8 bildet im Segmentabschnitt 5 und im Segmentabschnitt 6 jeweils ein Kreissegment um die Reifenachse. Die Nutflanke 9 bildet im Segmentabschnitt 5 und im Segmentabschnitt 6 jeweils ein Kreissegment um die Reifenachse.

Die im Nutgrund 10 der Nut 4 ausgebildete Schraffur ist mit einer Schraffurtiefe von mindestens 0,5mm bis maximal 1mm ausgebildet.

In einem in Fig.1 dargestellten Ausführungsbeispiel ist B₁ = B₂ gewählt. In einem in Fig.1 dargestellten Ausführungsbeispiel ist α = (β + δ) = 36° gewählt.

Die Größen B₁, B₂ und a sind beispielsweise mit B₁ = B₂ = 6mm und mit a = 8mm ausgebildet.

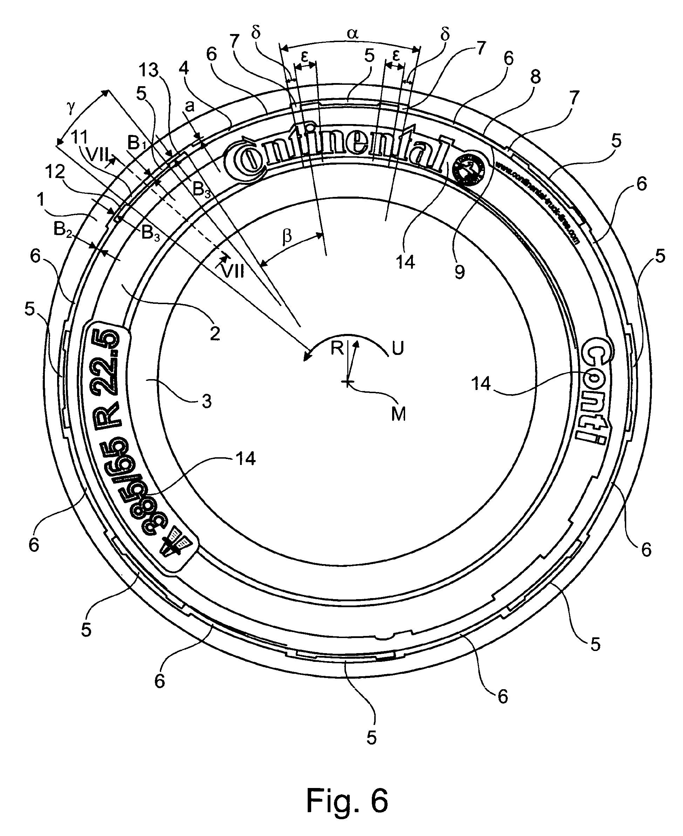

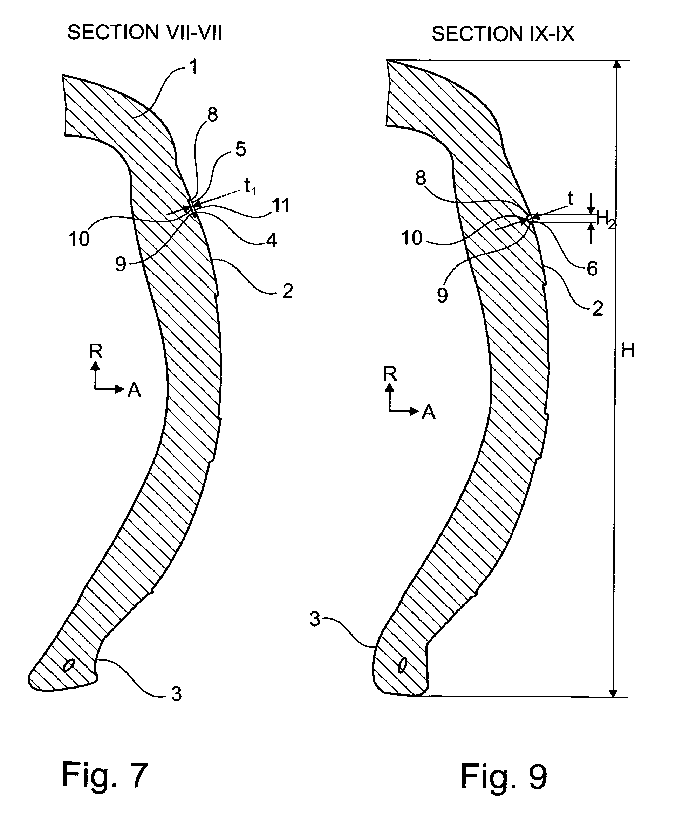

Die Figuren 6 und 7 zeigen ein alternatives Ausführungsbeispiel der Nut 4, bei welchem die Nut 4 in den radial inneren Nutsegmenten 6 jeweils mit ihrer nach radial innen hin gerichteten Flanke 9 ebenfalls über einen Winkel β erstreckt und in Umfangsrichtung ausgerichtet ist. Die Nut 4 ist in den radial äußeren Nutsegmenten 5 jeweils mit ihrer nach radial außen hin gerichteten Nutflanke 8 in Umfangsrichtung U ausgerichtet und über einen Winkel α erstreckt ausgebildet. Bei diesem Ausführungsbeispiel überlappt sich die Nutflanke 8 eines Umfangssegmentes 5 jeweils in Umfangsrichtung U mit der der Nutflanke 9 des in Umfangsrichtung U benachbarten Umfangssegmentes 6 über einen Umfangserstreckungswinkel δ und bildet dabei im Überlappungsabschnitt den Übergangsabschnitt 7. Zwischen dem in Umfangsrichtung U einem radial inneren Nutsegment 6 vorgeordneten Übergangsabschnitt 7 und dem Nutsegment 6 in Umfangsrichtung U nachgeordneten Übergangsabschnitt 7 ist das Segment 6 jeweils längs seiner gesamten Erstreckung wiederum mit konstanter in radialer Richtung R gemessenen Breite B₂ ausgebildet. Die Nutsegmente 5 sind in Umfangsrichtung U jeweils ausgehend von dem dem Nutsegment in Umfangsrichtung U vorgeordneten Übergangsabschnitt 7 in Richtung zu dem dem Nutsegment 5 nachgeordneten Übergangsabschnitt 7 aus einem an ersten seitlichen Segmentabschnitt 12 mit einer konstanten in radialer Richtung R gemessenen Breite B₃, aus einem sich in Umfangsrichtung U diesem seitlichen Segmentabschnitt 12 anschließenden, mittleren Segmentabschnitt 11 mit der konstanten Breite B₁ und aus einem sich dem mittleren Segmentabschnitt 11 in Umfangsrichtung U anschließenden und bis zum nachfolgenden Übergangsabschnitt 7 erstreckenden zweiten seitlichen Segmentabschnitt 13 mit einer konstanten in radialer Richtung R gemessenen Breite B₃ ausgebildet. Die Breiten B₁ und B₃ werden jeweils von der Nutflanke 8 nach radial innen hin gemessen. Die Nutflanke 8 erstreckt sich dabei im Nutsegment 6 zwischen dem dem Nutsegment nachfolgend angeordneten Übergangsabschnitt 7 in dem dem Nutsegment in Umfangsrichtung U vorgeordneten Übergangsabschnitt 7 und Umfangsrichtung U des Fahrzeugluftreifens. Die Breiten B₁ und B₃ sind dabei mit B₁ > B₃ ausgebildet. B₁ bildet dabei die maximale Breite der Nut 4 im Nutsegment 5. Die seitlichen Segmentabschnitte 12 und 13 erstrecken sich dabei jeweils über einen Umfangswinkel ε mit ε ≥ 2°, beispielsweise mit ε = 3°. Die Breite B₃ ist dabei mit (1/3)B₁ ≤ B₃ ≤ B₁ ausgebildet. Der mittlere Segmentabschnitt 11 erstreckt sich dabei jeweils über einen Umfangswinkel γ mit γ≥ 2°, beispielsweise mit γ = 5°.

Auch in diesem Ausführungsbeispiel ist der Versatz a mit a ≥ B₁ und a ≥ B₂ ausgebildet. Die Nutflanke 8 bildet im Segmentabschnitt 5 und die Nutflanke 8 sowie die Nutflanke 9 im Segmentabschnitt 6 jeweils ein Kreissegment um die Reifenachse.

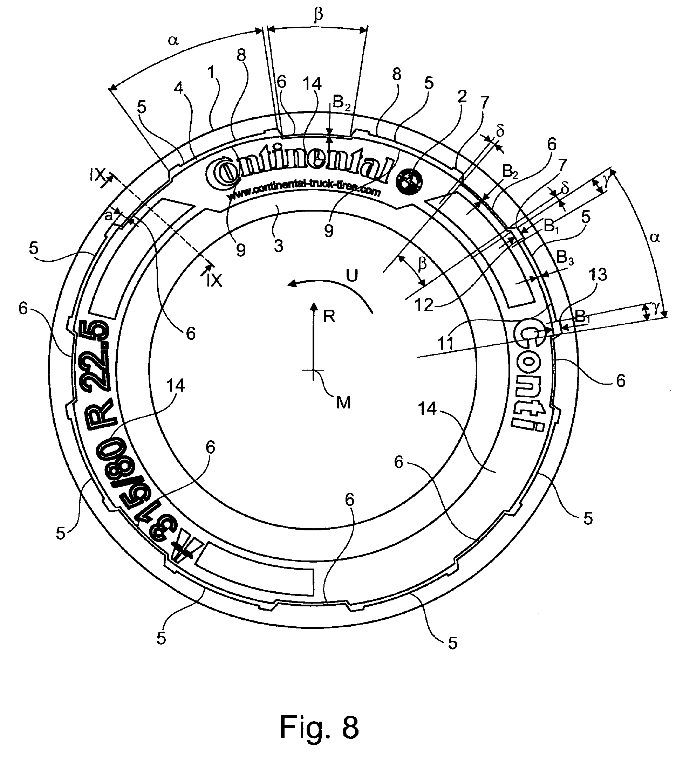

Die Figuren 8 und 9 zeigen ein weiteres Ausführungsbeispiel der Nut 4, bei welchem die Nutflanke 8 und die Nutflanke 9 in den radial inneren Nutsegmenten 6 längs der Erstreckung zwischen dem dem Nutsegment 6 vorgeordneten Übergangsabschnitt 7 und dem dem Nutsegment 6 nachgeordneten Übergangsabschnitt 7 jeweils in Umfangsrichtung U ausgerichtet sind und ein Kreissegment um die Reifenachse bilden. Die radial inneren Nutsegmente 6 erstrecken sich dabei mit ihren radial inneren Flanken 9 in Umfangsrichtung U ausgerichtet über den Winkel β. In diesem Ausführungsbeispiel ist die radial innere Nutflanke 9 in den radial äußeren Nutsegmenten 5 längs der Erstreckung zwischen dem dem Nutsegment 5 vorgeordneten Übergangsabschnitt 7 und dem dem Nutsegment 5 nachgeordneten Übergangsabschnitt 7 jeweils in Umfangsrichtung U ausgerichtet und bildet ein Kreissegment um die Reifenachse.

Die Umfangssegmente 6 sind dabei zwischen den beiden ein Nutsegment 6 in Umfangsrichtung begrenzenden Übergangsabschnitten 7 mit einer konstanten Breite B₂ ausgebildet.

Die Umfangsabschnitte 5 sind zwischen den die Umfangsabschnitte 5 jeweils in Umfangsrichtung U begrenzenden Übergangsabschnitten 7 aus einem unmittelbar an den einen Übergangsabschnitt 7 angrenzenden seitlichen Segmentabschnitt 12, aus einem unmittelbar an den anderen das Nutsegment 5 in Umfangsrichtung U begrenzenden Übergangsabschnitt 7 angrenzenden seitlichen Segmentabschnitt 13 und aus einem zwischen den beiden seitlichen Segmentabschnitten 12 und 13 ausgebildeten, mittleren Segmentabschnitt 11 ausgebildet. Die radial äußere Flanke 8 ist dabei in den beiden seitlichen Segmentabschnitten 12 und 13 jeweils über den Umfangswinkelabschnitt γ in Umfangsrichtung U des jeweiligen Seitenabschnitts 12 bzw. 13 ausgerichtet und somit kreissegmentförmig im radialen Abstand B₁ zur Nutflanke 9 ausgebildet. Die radial äußere Flanke 8 ist im mittleren Segmentabschnitt 11 in Umfangsrichtung U des Fahrzeugluftreifens ausgerichtet und kreissegmentförmig im radialen Abstand B₃ zur Flanke 8 im Segment 5 ausgebildet. Der Umfangswinkel γ ist mit γ ≥ 2°, beispielsweise mit γ = 5° ausgebildet. In den seitlichen, unmittelbar an die Übergangsabschnitte 7 ausgebildeten Segmentabschnitte 12 und 13 ist die Nut 4 im Nutsegment 5 mit einer maximalen Breite B₁ ausgebildet. Die Breite B₃ des mittleren Segmentabschnitts 11 ist mit B₃ ≤ B₁ ausgebildet. Auch in diesem Ausführungsbeispiel ist der Versatz a ausgehend von der Flanke 8 in den an den Übergangsbereich 7 angrenzenden Seitenabschnitten 12 bzw. 13 des Nutsegmentes 5 nach radial innen zum Nutsegment 6 hin gemessen mit a ≥ B₁ und mit a ≥ B₂. Im dargestellten Ausführungsbeispiel ist B₂ mit (1/3)B₃ ≤ B₂ ausgebildet.

### Bezugszeichenliste

### (Teil der Beschreibung)

- 1: Profilierter Laufstreifen
- 2: Seitenwandgummistreifen
- 3: Wulstbereich
- 4: Nut
- 5: Nutsegment
- 6: Nutsegment
- 7: Übergang
- 8: Flanke
- 9: Flanke
- 10: Nutgrund
- 11: Mittlerer Segmentabschnitt
- 12: Seitlicher Segmentabschnitt
- 13: Seitlicher Segmentabschnitt
- 14: Beschriftungsabschnitt

## Patentansprüche

1. Fahrzeugreifen - insbesondere Fahrzeugluftreifen - mit profiliertem Laufstreifen (1) und mit zwei Seitenwänden (2), wobei auf wenigstens einer Seitenwand (2) - insbesondere in der äußeren radialen Erstreckungshälfte der Seitenwand (2) - ein über den ganzen Umfang des Reifens erstrecktes - insbesondere schraffurartiges - Muster in einer über den ganzen Umfang des Reifens erstreckten und im Wesentlichen in Umfangsrichtung U ausgerichteten Nut (4) ausgebildet ist, welche mit ersten Nutsegmenten (5) und mit zweiten Nutsegmenten (6) ausgebildet ist, die in Umfangsrichtung U in alternierender Abfolge hintereinander angeordnet sind, wobei die Nutsegmente (5,6) nach radial außen hin jeweils von einer die Nut (4) nach radial außen begrenzenden radial äußeren Begrenzungsflanke (8) und nach radial innen hin von einer die Nut (4) nach radial innen begrenzenden radial inneren Begrenzungsflanke (9) begrenzt werden,
**dadurch gekennzeichnet,**
**dass** die ersten Nutsegmente (5) radial außerhalb der zweiten Nutsegmente (6) angeordnet sind, dass der Übergang zwischen erstem Nutsegment (5) und benachbartem zweitem Nutsegment (6) jeweils als radialer Versatz der Nut (4) um das Versatzmaß a nach radial innen und der Übergang zwischen zweitem Nutsegment (6) und zu diesem benachbartem ersten Nutsegment (5) jeweils als radialer Versatz der Nut (4) um das Versatzmaß a nach radial außen ausgebildet ist, und
**dass** das erste Nutsegment (5) zumindest in einem Umfangserstreckungsabschnitt mit seiner maximalen in radialer Richtung R gemessenen Breite B₁ mit a ≥ B₁ und das zweite Nutsegment (6) zumindest in einem Umfangserstreckungsabschnitt mit seiner maximalen in radialer Richtung R gemessenen Breite B₂ mit a ≥ B₂ ausgebildet ist.

2. Fahrzeugreifen gemäß den Merkmalen von Anspruch 1,
wobei die ersten Nutsegmente (5) sich über einen Umfangswinkel α des Reifens mit 10°≤a≤50° erstrecken gemessen längs der Erstreckung ihrer das erste Nutsegment (5) nach radial außen hin begrenzenden Flanke (8), und
wobei die zweiten Nutsegmente (6) sich über einen Umfangswinkel β des Reifens mit 10°≤β≤50° erstrecken gemessen längs der Erstreckung ihrer das zweite Nutsegment (6) nach radial außen hin begrenzenden Flanke (8).

3. Fahrzeugreifen gemäß den Merkmalen von Anspruch 1,
wobei die Umfangswinkel α und β mit α = β ausgebildet sind.

4. Fahrzeugreifen gemäß den Merkmalen von einem oder mehreren der vorangegangenen Ansprüche,
wobei die die Nut (4) im ersten Nutsegment (5) nach radial außen begrenzende radial äußeren Begrenzungsflanke (8) in Umfangsrichtung U erstreckt ausgerichtet ist und mit ihrer Erstreckung in der Seitenwandoberfläche ein Kreissegment bildet.

5. Fahrzeugreifen gemäß den Merkmalen von einem oder mehreren der vorangegangenen Ansprüche,
wobei die die Nut (4) im ersten Nutsegment (5) nach radial innen begrenzende, radial innere Begrenzungsflanke (9) in Umfangsrichtung U erstreckt ausgerichtet ist und mit ihrer Erstreckung in der Seitenwandoberfläche ein Kreissegment bildet.

6. Fahrzeugreifen gemäß den Merkmalen von Anspruch 1,
wobei die Nut (4) im ersten Nutsegment (5) längs ihrer Erstreckung wenigstens über einen Umfangswinkel γ mit γ≥ 2° mit der konstanten Breite B₁ ausgebildet ist.

7. Fahrzeugreifen gemäß den Merkmalen von Anspruch 6,
wobei die Nut (4) im ersten Nutsegment (5) jeweils in einem Umfangsabschnitt zwischen Versatz zum zweiten Nutsegment (6) und dem mit konstanter Breite Blausgebildeten Erstreckungsabschnitt mit einer Breite B₃ ausgebildet ist mit (1/3) B₁≤ B₃≤ B₁.

8. Fahrzeugreifen gemäß den Merkmalen von Anspruch 6 oder 7,
wobei die Nut (4) im ersten Nutsegment(5) längs ihrer Erstreckung von Versatz zum in Umfangsrichtung vorgeordneten zweiten Nutsegment (6) bis zum in Umfangsrichtung nachgeordneten zweiten Nutsegment (6) mit konstanter Breite B₁ ausgebildet ist.

9. Fahrzeugreifen gemäß den Merkmalen von Anspruch 6,
wobei das erste Nutsegment (5) zumindest in einem unmittelbar an den Versatz anschließenden Umfangserstreckungsabschnitt mit seiner maximalen in radialer Richtung R gemessenen Breite B₁ ausgebildet ist.

10. Fahrzeugreifen gemäß den Merkmalen von einem oder mehreren der vorangegangenen Ansprüche,
wobei die die Nut (4) im zweiten Nutsegment (6) nach radial innen begrenzende, radial äußere Begrenzungsflanke (9) in Umfangsrichtung U erstreckt ausgerichtet ist und mit ihrer Erstreckung in der Seitenwandoberfläche ein Kreissegment bildet.

11. Fahrzeugreifen gemäß den Merkmalen von Anspruch 10,
wobei das zweite Nutsegment (6) zumindest in einem unmittelbar an den Versatz anschließenden Umfangserstreckungsabschnitt mit seiner maximalen in radialer Richtung R gemessenen Breite B₂ ausgebildet ist.

12. Fahrzeugreifen gemäß den Merkmalen von Anspruch 1 oder 10,
wobei die Nut (4) im zweiten Nutsegment (6) längs ihrer Erstreckung von Versatz zum in Umfangsrichtung vorgeordneten ersten Nutsegment (5) bis zum in Umfangsrichtung nachgeordneten ersten Nutsegment (5) mit konstanter Breite B₂ ausgebildet ist.

13. Fahrzeugreifen gemäß den Merkmalen von einem oder mehreren der vorangegangenen Ansprüche,
wobei die Breiten B₁ und B₂ mit (0,25 B₁) ≤ B₂ ≤ B₁ ausgebildet sind.

## Claims

1. Vehicle tire - in particular pneumatic vehicle tire - having a profiled tread (1) and having two sidewalls (2), wherein, on at least one sidewall (2) - in particular in the outer half of the radial extent of the sidewall (2) - an - in particular hatched - pattern which extends over the entire circumference of the tire is formed in a groove (4) which extends over the entire circumference of the tire and which is oriented substantially in a circumferential direction U, said groove being formed with first groove segments (5) and with second groove segments (6) which are arranged one after the other in an alternating sequence in the circumferential direction U, wherein the groove segments (5, 6) are delimited radially to the outside in each case by a radially outer delimiting flank (8), which delimits the groove (4) radially to the outside, and radially to the inside by a radially inner delimiting flank (9) which delimits the groove (4) radially to the inside,
**characterized**
**in that** the first groove segments (5) are arranged radially outside the second groove segments (6), in that the transition between the first groove segment (5) and adjacent second groove segment (6) is formed in each case as a radial offset of the groove (4) radially inward by the offset dimension a, and the transition between the second groove segment (6) and first groove segment (5) adjacent thereto is formed in each case as a radial offset of the groove (4) radially outward by the offset dimension a, and
**in that** the first groove segment (5) is formed with its maximum width B₁, measured in the radial direction R, at least in one circumferential extent section, where a ≥ B₁, and the second groove segment (6) is formed with its maximum width B₂,
measured in the radial direction R, at least in one circumferential extent section, where a ≥ B₂.

2. Vehicle tire according to the features of Claim 1,
wherein the first groove segments (5) extend over a circumferential angle α of the tire, where 10°≤α≤50°, measured along the extent of their flank (8) which delimits the first groove segment (5) radially to the outside, and wherein the second groove segments (6) extend over a circumferential angle β of the tire, where 10°≤β≤50°, measured along the extent of their flank (8) which delimits the second groove segment (6) radially to the outside.

3. Vehicle tire according to the features of Claim 1,
wherein the circumferential angles α and β are configured such that α = β.

4. Vehicle tire according to the features of one or more of the preceding claims,
wherein the radially outer delimiting flank (8) which delimits the groove (4) radially to the outside in the first groove segment (5) is oriented so as to extend in the circumferential direction U, and forms a circular segment by way of its extent in the sidewall surface.

5. Vehicle tire according to the features of one or more of the preceding claims,
wherein the radially inner delimiting flank (9) which delimits the groove (4) radially to the inside in the first groove segment (5) is oriented so as to extend in the circumferential direction U and forms a circular segment by way of its extent in the sidewall surface.

6. Vehicle tire according to the features of Claim 1,
wherein the groove (4) is, along its extent in the first groove segment (5), formed with the constant width B₁ at least over a circumferential angle γ, where γ ≥ 2°.

7. Vehicle tire according to the features of Claim 6,
wherein the groove (4) is, in the first groove segment (5), formed with a width B₃ in each case in a circumferential section between the offset to the second groove segment (6) and the extent section formed with constant width B₁, where (1/3) B₁≤B₃≤B₁.

8. Vehicle tire according to the features of Claim 6 or 7,
wherein the groove (4), in the first groove segment (5), is formed with constant width B₁ along its extent from the offset to the preceding second groove segment (6) in the circumferential direction to the following second groove segment (6) in the circumferential direction.

9. Vehicle tire according to the features of Claim 6,
wherein the first groove segment (5) is formed with its maximum width B₁, measured in the radial direction R, at least in a circumferential extent section directly adjoining the offset.

10. Vehicle tire according to the features of one or more of the preceding claims,
wherein the radially outer delimiting flank (9) which delimits the groove (4) radially to the inside in the second groove segment (6) is oriented so as to extend in the circumferential direction U and forms a circular segment by way of its extent in the sidewall surface.

11. Vehicle tire according to the features of Claim 10,
wherein the second groove segment (6) is formed with its maximum width B₂, measured in the radial direction R, at least in a circumferential extent section directly adjoining the offset.

12. Vehicle tire according to the features of Claim 1 or 10,
wherein the groove (4), in the second groove segment (6), is formed with constant width B₂ along its extent from the offset to the preceding first groove segment (5) in the circumferential direction to the following first groove segment (5) in the circumferential direction.

13. Vehicle tire according to the features of one or more of the preceding claims,
wherein the widths B₁ and B₂ are configured such that (0.25 B₁) ≤ B₂ ≤ B₁.

## Revendications

1. Bandage pour roue de véhicule, notamment bandage pneumatique pour roue de véhicule, présentant une bande de roulement profilée (1) et deux parois latérales (2), et dans lequel sur au moins une paroi latérale (2), notamment sur la moitié radialement extérieure de l'extension de la paroi latérale (2), un motif en particulier en forme de hachures, s'étendant sur toute la périphérie du bandage de roue, est formé dans une rainure (4) qui s'étend sur toute la périphérie du bandage de roue, orientée essentiellement dans la direction périphérique U, configurée avec des premiers segments (5) de rainure et des deuxièmes segments (6) de rainure disposés les uns derrière les autres en succession alternée dans la direction périphérique U, les segments (5, 6) de rainure étant délimités radialement vers l'extérieur par un flanc frontière (8) radialement extérieur qui délimite la rainure (4) radialement vers l'extérieur et radialement vers l'intérieur par un flanc frontière (9) radialement intérieur qui délimite la rainure (4) radialement vers l'intérieur,
**caractérisé en ce que**
les premiers segments (5) de rainure sont disposés radialement à l'extérieur des deuxièmes segments (6) de rainure, **en ce que** la transition entre le premier segment (5) de rainure et le deuxième segment (6) de rainure voisin est configurée comme décalage radial de la rainure (4) sur une distance de décalage a radialement vers l'intérieur, **en ce que** la transition entre le deuxième segment (6) de rainure et le premier segment (5) de rainure voisin de ce dernier est configurée chaque fois comme décalage radial de la rainure (4) sur la distance de décalage a radialement vers l'extérieur et
**en ce qu'**au moins dans une section de son extension périphérique, le premier segment (5) de rainure est configuré à sa largeur B₁ maximale dans la direction radiale R telle que a ≥ B₁ et le deuxième segment (6) de rainure est configuré au moins dans une section de son extension périphérique à sa largeur B₂ maximale dans la direction axiale R, telle que a ≥ B₂.

2. Bandage pour roue de véhicule selon les caractéristiques de la revendication 1, dans lequel le long de l'extension du flanc (8) qui délimite radialement vers l'extérieur le premier segment (5) de rainure, les premiers segments (5) de rainure s'étendent sur un angle périphérique α de bandage de roue tel que 10° ≤ α ≤ 50° et dans lequel le long de l'extension du flanc (8) qui délimite le deuxième segment (6) de rainure radialement vers l'extérieur, les deuxièmes segments (6) de rainures s'étendant sur un angle périphérique β du bandage de roue tel que 10° ≤ β ≤ 50°.

3. Bandage pour roue de véhicule selon les caractéristiques de la revendication 1, dans lequel l'angle périphérique α, et β sont tels que α = β.

4. Bandage pour roue de véhicule selon les caractéristiques d'une ou plusieurs des revendications précédentes, dans lequel le flanc frontière (8) radialement extérieur délimitant radialement vers l'extérieur la rainure (4) du premier segment (5) de la rainure est orienté dans la direction périphérique U et forme un segment de cercle avec son extension dans la surface de la paroi latérale.

5. Bandage pour roue de véhicule selon les caractéristiques d'une ou plusieurs des revendications précédentes, dans lequel le flanc frontière (9) radialement intérieur délimitant radialement vers l'intérieur la rainure (4) du premier segment (5) de la rainure est orienté dans la direction périphérique U et forme un segment de cercle avec son extension dans la surface de la paroi latérale.

6. Bandage pour roue de véhicule selon les caractéristiques de la revendication 1, dans lequel le long de son extension au moins sur un angle périphérique γ, γ ≥ 2°, la rainure (4) présente une largeur constante B₁ dans le premier segment (5) de rainure.

7. Bandage pour roue de véhicule selon les caractéristiques de la revendication 6, dans lequel dans le premier segment (5) de rainure, la rainure (4) est formée à une largeur B₃, avec (1/3) B₁ ≤ B₃ ≤ B₁, dans une section périphérique entre le décalage vers le deuxième segment (6) de rainure et la section d'extension de largeur constante B₁.

8. Bandage pour roue de véhicule selon les caractéristiques des revendications 6 ou 7, dans lequel dans le premier segment (5) de la rainure, le long de son extension entre le décalage et le deuxième segment (6) de rainure qui le précède dans la direction périphérique jusqu'au deuxième segment (6) de rainure suivant dans la direction périphérique, la rainure (4) est formée à une largeur B₁ constante.

9. Bandage pour roue de véhicule selon les caractéristiques de la revendication 6, dans lequel au moins dans une section d'extension périphérique qui suit directement le décalage, le premier segment (5) de rainure est formé à une largeur B₁ maximale mesurée dans la direction radiale R.

10. Bandage pour roue de véhicule selon les caractéristiques d'une ou plusieurs des revendications précédentes, dans lequel le flanc frontière (9) radialement extérieur délimitant la rainure (4) radialement vers l'intérieur dans le deuxième segment (6) de rainure est orienté dans la direction périphérique U et forme un segment de cercle avec son extension dans la surface de la paroi latérale.

11. Bandage pour roue de véhicule selon les caractéristiques de la revendication 10, dans lequel au moins dans la partie de son extension périphérique qui se raccorde au décalage, le deuxième segment (6) de rainure présente sa largeur maximale B₂ mesurée dans la direction radiale R.

12. Bandage pour roue de véhicule selon les caractéristiques des revendications 1 ou 10, dans lequel dans le deuxième segment (6) de rainure la rainure (4) présente une largeur constante B₂ dans son extension entre le décalage et le premier segment (5) de rainure qui le précède dans la direction périphérique et le premier segment (5) de rainure qui le suit dans la direction périphérique.

13. Bandage pour roue de véhicule selon les caractéristiques d'une ou plusieurs des revendications précédentes, dans lequel les largeurs B₁ et B₂ sont telles que (0,25 B₁) ≤ B₂ ≤ B₁.
